# EUROPEAN PATENT SPECIFICATION

(11) **EP 1 021 652 B1**
(45) Date of publication and mention of the grant of the patent: **11.06.2008**
(21) Application number: 98947238.6
(22) Date of filing: 07.10.1998
(51) Int. Cl.: F02M 21/02, F02M 51/06

(54) **VAPOUR FUEL INJECTION VALVE**
EINSPRITZVENTIL FÜR BRENNSTOFFDÄMPFE
INJECTEUR DE CARBURANT SOUS FORME DE VAPEUR

(30) Priority: 07.10.1997 AU PO964897
(43) Date of publication of application: 26.07.2000
(73) Proprietor: Gas Injection Technologies Pty. Ltd, Guilford, NSW 2161 (AU)
(72) Inventor: CAMPBELL, Bill, Ross, Guildford, NSW 2161 (AU)
(74) Representative: Hale, Peter
(86) International application number: PCT/AU1998/000837
(87) International publication number: WO 1999/018345

(56) References cited:
- EP-A- 0 204 946
- EP-A- 0 491 404
- WO-A-89/04920
- WO-A-94/15092
- GB-A- 2 175 452
- US-A- 5 348 233
- US-A- 5 408 957
- DATABASE WPI Week 199815, Derwent Publications Ltd., London, GB; Class X22, AN 1998-164142, XP002992827 & JP 10 030 517 A (AISAN KOGYO KK) 03 February 1998

## Description

### Technical Field

This invention concerns a vapour gas injector valve, that is a valve for the injection of liquid petroleum gas (LPG) and other gaseous fuels, rather than petrol (gasoline) or diesel, into the cylinder of an internal combustion engine.

### Background Art

LPG, natural gas and hydrogen are cleaner and potentially less expensive fuels than petrol for automobiles. As a result cars are currently being built with LPG fuel systems, and existing cars are being converted to run on LPG. Where the engine is carbureted, conversion is fairly straight forward, however, it has been difficult to convert fuel injection systems because of the very high volume of LPG that must be injected compared to petrol. The document US-A-5.348.233 shows an example of a high volume gaseous fuel injector according to the prior art.

### Summary of the Invention

The invention is a gas injector valve, including: a valve chamber having an inlet port and an outlet port having a flared throat. A valve member is trapped within the valve chamber and moveable between a first position in which it seals against a valve seat surrounding the outlet port, and a second position in which gas may flow from the inlet port to the outlet port. The valve member comprises a disc of hard magnetisable material having one or more holes though it. An electrical winding is selectively energisable to create a magnetic field within the valve chamber to draw the valve member from the first position to the second position. Two electrical windings may be used although this is not essential. A first having a low resistance to open the valve quickly, and a second having a higher resistance to hold the valve open for the required period of time. The materials, shapes and configurations of the valve member and the valve chamber, including the inlet and outlet ports are selected to achieve flow rates of vapour sufficient for internal combustion engine operation. The injector valve may be very compact and may enjoy operating noise that is less than or equal to petrol injectors.

The valve member may comprise a disc of hardened steel having a ratio of diameter to thickness of about 14:1. In one example the diameter is 13.8mm and the thickness is 1mm. The ratio of the diameter of the disc to the diameters of the inlet and outlet is about 4:1. The disc may have a series of eight holes, each having a diameter of 1.3mm, around its edge and outside the area bounded by the valve seat when the valve member is in the first position. The ratio of the thickness of the disc to the distance the disc travels between the first and second positions is about 3.33:1.

A return spring may be used to bias the valve member to the first position.

The flared end of the outlet port may be formed by a chamfered edge of the valve seat, the chamfer may be about 45o, and may lead into a bore, which may have a diameter of 3.5mm. The chamfer on the outlet may have a thickness of about 0.85mm.

### Brief Description of the Drawings

An example of the invention will now be described with reference to the accompanying drawings, in which:
Figure 1 is a section through gas injector valve;

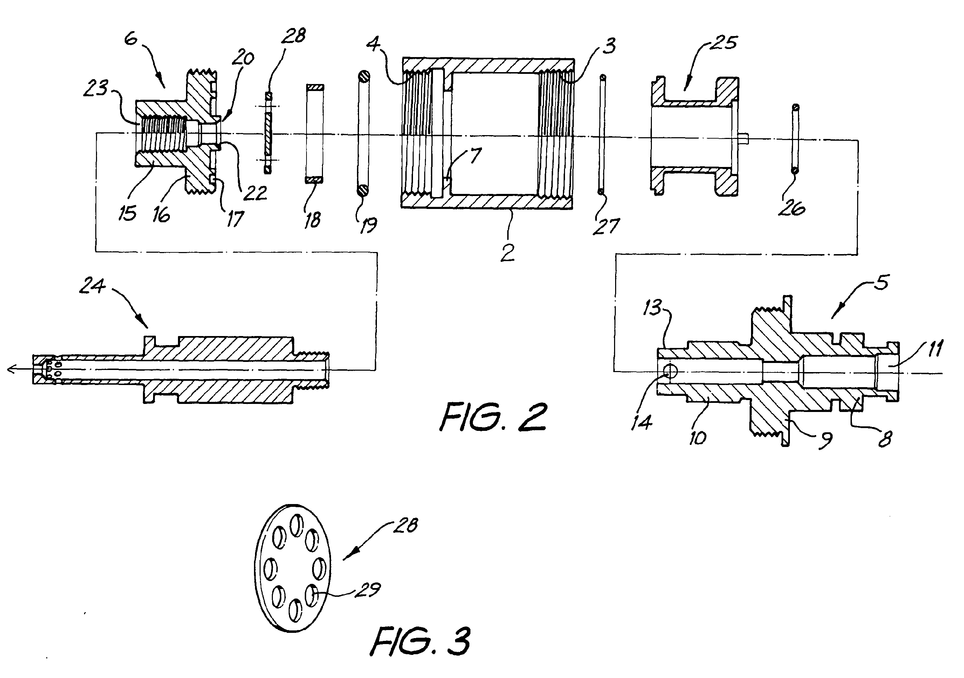

Figure 2 is an exploded view of the valve; and
Figure 3 is a pictorial view of the valve member.

The same reference numerals have been used throughout the drawings to refer to corresponding features.

### Best Modes for Carrying out the Invention

Gas injector valve 1 has a steel cylindrical outer sleeve 2 having a diameter of 24mm and a length of 35.7mm. The sleeve has 7/8" thread formations, 3 and 4, at the inlet and outlet ends respectively. The sleeve is closed by a steel inlet cap 5 screwed into the inlet thread formations 3, and a steel outlet cap 6 screwed into the thread formations 4 at the other end. The outlet cap 6 extends into the cylinder 2 to meet a circular flange 7 which is integral to the cylinder and which extends radially inward to define a circular hole 14.3mm in diameter, and about 7.5mm from the outlet end.

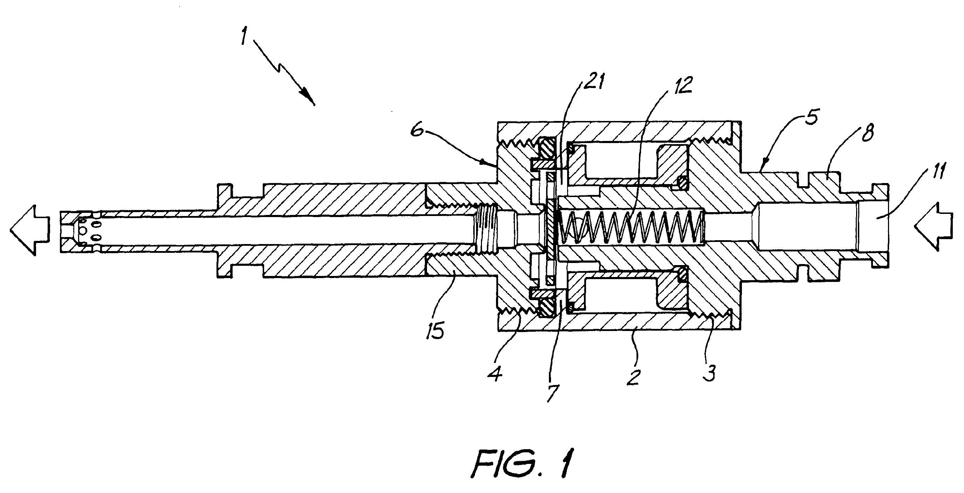

The inlet cap 5 comprises a nozzle 8, a body 9 and an extension 10 which extends into the circular hole bounded by flange 7. A bore 11 extends axially through the inlet cap. In the region of the nozzle 8, bore 11 has a relatively large diameter of 5.5mm, which narrows to 3mm as it passes through the body and widens to an intermediate diameter of 4.1mm in the distal half of extension 10 to accommodate a return spring 12 (shown only in Figure 1). The tip 13 of extension 10 thins and is penetrated by two holes 14 each 2.5mm in diameter. A filter (not shown) may be fitted at the inlet if required.

The outlet cap 6 is made from 304 Stainless Steel, and it has an extension 15 and a body 16. The inner face of the body has an outer circular groove 17, which cooperates with spacer ring 18 to abut against the side of radial flange 7 to form a seal with the help of 'O'-ring 19. The inner face of the body is lapped to form a valve seat 20 at its centre.

A cylindrical chamber 21 is created within the valve. The chamber is bounded radially by the flange 7 and the spacer 18, and at one side by the valve seat 20. The other side the chamber 21 is bounded by the distal end 13 of extension 10. The inside of spacer 18, the valve seat 20 and the distal end 13 are all hardened. The valve seat has a 45o chamfer 22 leading into the bore 23 which has a diameter of 3mm. The bore subsequently widens in the nozzle.

An outlet nozzle 24 is connected into extension 15 of outlet cap 6 to facilitate improved mixing of the gas with the incoming air.

A plastics former 25 carrying electrical windings fits onto the extension 10 of inlet cap 5. 'O'-rings 26 and 27 seal respective ends of the plastics former between the inner face of body 9 and the flange 7. Two windings are carried on the plastics former 25. The first winding is formed of 0.28 mm wire and has 135 turns to give an impedance of 1.6 Ω, and the second winding is formed of 0.18 mm wire and has 360 turns to give an impedance of 15.2 Ω. The windings are connected to electrical supply terminals (not shown) to enable them to be energised by an external source of electrical power (not shown) under the control of the vehicle's on-board computer (not shown). The first, low impedance, coil is energised for 2 to 3 milliseconds by a transistor earthing through a switching device in a manner which does not load the computer. This opens the injector quickly. The second, high impedance, coil matches the standard 15 Ω expected of injectors by the on-board computer, and is controlled by the computer as normal to hold the injector open for the required time. In this manner the injector is opened quickly but not so as to overload the computer. The back emf can also be fed back to the computer if required to check that the injectors are connected correctly. The switching device is encapsulated into the wiring plug of the injector.

A flutter valve 28 resides in the cylindrical chamber 21. The valve comprises a disc of AS1442/M1020 low carbon steel hardened using a Carbo Nitriding process to hardness of 58 Rockwell C. The disc weighs 0.9538 grams. The disc has a diameter of 13.8mm and a thickness of 1.2mm which is ground to 1mm after hardening. The disc has a series of eight holes 29, each having a diameter of 1.3mm, around its edge outside the valve seat 20. The centres of the holes 29 are 4.2mm from the centre of the disc 28. The valve is moveable between a first position in which it closes against the valve seat 20, and a second position in which it is drawn away from the valve seat. The travel of the disc valve is 0.3 mm

The injector works in the following way. Adaptors are fitted to the inlet nozzle 8 and the outlet nozzle 24 so that the injector is able to be fitted in place of the original petrol injectors. Gas flows through the inlet nozzle 8, and passes through the bore 11 to the valve disc 28. If the valve disc 28 is closed against outlet seat 20 the gas flow is stopped and builds up in the chamber 21. When an electric current is passed through the electrical windings the valve disc 28 is attracted to the solenoid core which lifts the disc off its seat allowing vapour to pass, via transverse holes 14, through the holes 29 in the disc and through the outlet bore 23.

The valve may be operated with opening times of 1.4 milliseconds, closing times of 2.0 milliseconds and a flow rate of 80 litres per minute vapour.

Although the invention has been described with reference to a particular example it should be appreciated that the dimensions of the valve will change for different sized valves. It should also be understood that the inlet and outlet caps need not be screwed onto the cylindrical sleeve of the injector valve, and any other convenient method of attachment may be used, such as crimping.

The vapour fuel is supplied to the injector from a liquid reservoir, and before it reaches the injector it passes through a two stage regulator and filter to condition it for combustion. In the first stage of the regulator the liquid at about 100 psi is converted to gas at about 40 psi. The gas then passes through a narrow labyrinthine path where it is warmed by the engine's coolant before entering the second regulator. The second 'gas pressure' regulator lowers the gas pressure to inlet manifold pressure. The gas is filtered as it leaves the regulator, and again at the injector.

## Claims

1. A gas injector valve (1) including: a valve chamber (21) having an inlet port and an outlet port (23) having a flared throat, a valve member (28) trapped within the valve chamber and moveable between a first position in which it seals against a valve seat (20) surrounding the outlet port, and a second position in which gas may flow from the inlet port to the outlet port; where the valve member (28) comprises a disc of hard magnetisable material having one or more holes (29) though it; and where an electrical winding is selectively energisable to create a magnetic field within the valve chamber to draw the valve member from the first position to the second position; **characterised in that** two electrical windings are used; a first having a low resistance to open the valve quickly, and a second having a higher resistance to hold the valve open for a required period of time.

2. A gas injector valve according to Claim 1, where the valve member (28) comprises a disc of hardened steel having a ratio of diameter to thickness of about 14:1.

3. A gas injector valve according to claim 2, where the diameter of the disc is 13.8mm and the thickness is 1mm.

4. A gas injector valve according to claim 2 or claim 3, where the ratio of the diameter of the disc to the diameters of the inlet and outlet is about 4:1.

5. A gas injector valve according to any one of claims 2 to 4, where the disc has a series of eight holes (29), each having a diameter of 1.3mm, around its edge and outside the area bounded by the valve seat (20) when the valve member (28) is in the first position.

6. A gas injector valve according any one of claims 2 to 5, where the ratio of the thickness of the disc to the distance the disc travels between the first and second positions is about 3.33:1.

7. A gas injector valve according to any one of the preceding claims, where a return spring (12) is used to bias the valve member to the first position.

8. A gas injector valve according to any one of the preceding claims, where the end of the outlet port (23) is formed by a chamfered edge (22) of the valve seat (20).

9. A gas injector valve according to claim 8, where the chamfer (22) is about 45°.

10. A gas injector valve according to claims 8 or 9, where the chamfer (22) leads into a bore (23) which has a diameter of 3.5mm.

11. A gas injector valve according to any one of claims 8 to 10, where the chamfer (22) on the outlet has a thickness of about 0.85mm.

## Patentansprüche

1. Gaseinspritzventil (1) umfassend: eine Ventilkammer (21) mit einer Einlaßöffnung und einer Auslassöffnung (23), die einen aufgeweiteten Hals aufweist, ein Ventilelement (28), das in der Ventilkammer gefangen und zwischen einer ersten Position, in der es gegen einen Ventilsitz (20), der die Auslassöffnung umgibt, abdichtet, und einer zweiten Position, in der Gas aus der Einlassöffnung zu der Auslassöffnung strömen kann, bewegbar ist; wobei das Ventilelement (28) eine Scheibe aus hartem magnetisierbarem Material umfasst, durch die ein oder mehrere Löcher (29) vorgesehen sind; und wobei eine elektrische Wicklung selektiv erregbar ist, um in der Ventilkammer ein Magnetfeld zu schaffen und somit das Ventilelement von der ersten Position in die zweite Position zu ziehen; **dadurch gekennzeichnet, dass** zwei elektrische Wicklungen verwendet werden; wobei eine erste eine niedrigen Widerstand aufweist, um das Ventil schnell zu öffnen, und eine zweite einen höheren Widerstand aufweist, um das Ventil für eine erforderliche Zeitdauer offen zu halten.

2. Gaseinspritzventil nach Anspruch 1, wobei das Ventilelement (28) eine Scheibe aus gehärtetem Stahl umfasst, die ein Verhältnis von Durchmesser zu Dicke von etwa 14:1 aufweist.

3. Gaseinspritzventil nach Anspruch 2, wobei der Durchmesser der Scheibe 13,8 mm beträgt und die Dicke 1 mm beträgt.

4. Gaseinspritzventil nach Anspruch 2 oder Anspruch 3, wobei das Verhältnis des Durchmessers der Scheibe zu den Durchmessern des Einlasses und des Auslasses etwa 4:1 beträgt.

5. Gaseinspritzventil nach einem der Ansprüche 2 bis 4, wobei die Scheibe eine Reihe von acht Löchern (29) mit jeweils einem Durchmesser von 1,3 mm um ihre Kante und außerhalb der Fläche besitzt, die durch den Ventilsitz (20) begrenzt ist, wenn sich das Ventilelement (28) in der ersten Position befindet.

6. Gaseinspritzventil nach einem der Ansprüche 2 bis 5, wobei das Verhältnis der Dicke der Scheibe zu der Distanz, die die Scheibe zwischen der ersten und der zweiten Position zurücklegt, etwa 3,33:1 beträgt.

7. Gaseinspritzventil nach einem der vorhergehenden Ansprüche, wobei eine Rückstellfeder (12) verwendet wird, um das Ventilelement in die erste Position vorzuspannen.

8. Gaseinspritzventil nach einem der vorhergehenden Ansprüche, wobei das Ende der Auslassöffnung (23) durch eine angefaste Kante (22) des Ventilsitzes (20) gebildet ist.

9. Gaseinspritzventil nach Anspruch 8, wobei die Fase (22) etwa 45° beträgt.

10. Gaseinspritzventil nach den Ansprüchen 8 oder 9, wobei die Fase (22) in eine Bohrung (23) führt, die einen Durchmesser von 3,5 mm aufweist.

11. Gaseinspritzventil nach einem der Ansprüche 8 bis 10, wobei die Fase (22) an dem Auslass eine Dicke von etwa 0,85 mm aufweist.

## Revendications

1. Soupape d'injection de carburant (1) comprenant : une chambre de soupape (21) comportant un orifice d'entrée et un orifice de sortie (23) avec une gorge évasée, un élément de soupape (28) emprisonné dans la chambre de soupape et déplaçable entre une première position dans laquelle il obture de façon étanche contre un siège de soupape (20) entourant l'orifice de sortie, et une seconde position dans laquelle le carburant peut s'écouler depuis l'orifice d'entrée vers l'orifice de sortie ; dans lequel l'élément de soupape (28) comprend un disque en matériau magnétisable dur avec un ou plusieurs trous (29) pratiqués à travers celui-ci ; et dans lequel un enroulement électrique est excitable sélectivement pour créer un champ magnétique à l'intérieur de la chambre de soupape, pour attirer l'élément de soupape depuis la première position vers la seconde position ; **caractérisé en ce que** l'on utilise deux enroulements électriques, un premier ayant une faible résistance pour ouvrir la soupape rapidement et un second ayant une résistance plus élevée pour maintenir la soupape ouverte pendant une durée requise.

2. Soupape d'injection de carburant selon la revendication 1, dans lequel l'élément de soupape (28) comprend un disque en acier trempé ayant un rapport entre le diamètre et l'épaisseur d'environ 14:1.

3. Soupape d'injection de carburant selon la revendication 2, dans lequel le diamètre du disque est de 13,8 mm et l'épaisseur de 1 mm.

4. Soupape d'injection de carburant selon la revendication 2 ou la revendication 3, dans lequel le rapport entre le diamètre du disque et les diamètres d'entrée et de sortie est d'environ 4:1.

5. Soupape d'injection de carburant selon l'une quelconque des revendications 2 à 4, dans lequel le disque présente une série de huit trous (29), chacun ayant un diamètre de 1,3 mm autour de son bord et à l'extérieur de la zone délimitée par le siège de soupape (20) lorsque l'élément de soupape (28) se trouve dans la première position.

6. Soupape d'injection de carburant selon l'une quelconque des revendications 2 à 5, dans lequel le rapport entre l'épaisseur du disque et la distance de déplacement du disque entre la première et la seconde position est d'environ 3,33:1.

7. Soupape d'injection de carburant selon l'une quelconque des revendications précédentes, dans lequel un ressort de rappel (12) est utilisé pour pré-contraindre l'élément de soupape vers la première position.

8. Soupape d'injection de carburant selon l'une quelconque des revendications précédentes, dans lequel l'extrémité de l'orifice de sortie (23) est constituée par un bord chanfreiné (22) du siège de soupape (20).

9. Soupape d'injection de carburant selon la revendication 8, dans lequel le chanfrein (22) est d'environ 45°.

10. Soupape d'injection de carburant selon la revendication 8 ou la revendication 9, dans lequel le chanfrein (22) mène dans un alésage (23) qui présente un diamètre de 3,5 mm.

11. Soupape d'injection de carburant selon l'une quelconque des revendications 8 à 10, dans lequel le chanfrein (22) sur la sortie présente une épaisseur d'environ 0,85 mm.
